# EUROPÄISCHE PATENTSCHRIFT

(11) **EP 1 980 928 B1**
(45) Veröffentlichungstag und Bekanntmachung des Hinweises auf die Patenterteilung: **11.01.2012**
(21) Anmeldenummer: 07007656.7
(22) Anmeldetag: 14.04.2007
(51) Int. Cl.: G05G 9/047, H01H 25/04

(54) **Elektrischer Schalter**
Electric switch
Commutateur électrique

(43) Veröffentlichungstag der Anmeldung: 15.10.2008
(73) Patentinhaber: Delphi Technologies, Inc., Troy, MI 48007 (US)
(72) Erfinder: Köhler, Joachim, 55546 Biebelsheim (DE); Fangmann, Gerhard, 51709 Marienheide (DE); Tietgen, Martin, 51647 Gummersbach (DE)
(74) Vertreter: Robert, Vincent

(56) Entgegenhaltungen:
- EP-A- 0 877 312
- WO-A-02/061523
- DE-A1- 3 115 793
- DE-A1-102004 006 166
- DE-C- 144 332
- DE-C- 640 009
- DE-U1- 8 626 528
- US-A- 2 242 167
- US-A- 3 731 023
- US-A- 4 489 303
- US-A- 4 500 867
- US-A- 4 654 576

## Beschreibung

Die Erfindung bezieht sich auf einen elektrischer Schalter mit einem getastet aus einer Neutralposition in mindestens zwei entgegengesetzte Richtungen verschwenkbaren Betätigungselement mit einem in ein Gehäuse ragenden Ansatz, dem eine Schalteinrichtung zugeordnet ist.

Die DE 31 15 793 C2 offenbart einen elektrischen Schalter, insbesondere zur automatischen Geschwindigkeitsregelung von Kraftfahrzeugen und zur Anordnung am Lenkstock von Kraftfahrzeugen, der aus einem Schaltergehäuse mit einem darin schwenkbar gelagerten Schalthebel besteht, der aus einer mittleren Ausschaltstellung in vier kreuzweise um die Ausschaltstellung angeordnete Arbeitsschaltstellungen drängbar und selbsttätig in die Ausschaltstellung rückstellbar ist. Mittels des Schalthebels ist ein elektrischer Kontakt zwischen ortsbeweglichen Kontaktteilen herstellbar, wobei einerseits die gehäusefesten Kontaktteile in einer etwa parallel zur Verstellrichtung des gehäuseinneren Schalthebelendes verlaufenden Fläche angeordnet sind und andererseits die ortsbeweglichen Kontaktteile parallel zu dieser Fläche durch das Schalthebelendteil gleitend verschiebbar sind. Hierzu sind die ortsbeweglichen Kontaktteile in einer sich an einer Gehäusezwischenwand mit ihrer den Kontaktteilen abgewandten Seite abstützenden, verschiebbaren Trägeranordnung gehalten, die in ihrer Mitte zwischen den ortsbeweglichen Kontaktteilen einen dem Schalthebel zugeordneten Durchbruch mit vier in Durchgangsrichtung ballig ausgeführten Seitenflächen aufweist. Zur zwangsweisen Rückstellung des Schalthebels in seine Mittellage presst eine Schraubendruckfeder im Schalthebelendteil eine Kugel gegen die die ortsfesten Kontaktteile tragende Fläche, die in dem mit der Kugel korrespondierenden Bereich von der Mittellage ausgehend nach allen Seiten hin ansteigt. Die Trägeranordnung besteht aus zwei kreuzweise angeordneten, jeweils ortsbewegliche Kontaktteile haltende Führungsschlitten, die in zwei senkrecht zueinander stehende Richtungen relativ zueinander verschiebbar sind, wobei der Durchbruch für den Schalthebel durch beide Führungsschlitten verläuft und jedem der Führungsschlitten zwei der vier balligen Seitenflächen zugeordnet sind. Dieser Schalter ist insofern nachteilig, als er keine großen auf ihn einwirkenden Kräfte beim Schalten aufnehmen kann. Als Lenkstockshalter ist er im Wesentlichen für die Belastung durch einen Finger eines Nutzers ausgelegt.

Im Weiteren zeigt die US-A-3 731 023 einen Schalter mit einem aus einer Neutralposition in mindestens zwei entgegengesetzte Richtungen verschwenkbaren Betätigungselement mit einem in ein Gehäuse ragenden Ansatz, dem eine Schalteinrichtung zugeordnet ist.

Ferner offenbart die DE 144 332 C einen Schalter mit einem aus einer Neutralposition in eine Schaltposition zu verschwenkenden Betätigungselement, wobei dem Schalter eine Vorrichtung zur langsamen Zurückführung des Betätigungselementes in seine Neutralposition zugeordnet ist. Bei der Vorrichtung handelt es sich um eine Kolben-Zylindereinheit, die nach dem Loslassen des Betätigungselementes dessen langsames Verschwenken aus der Schaltposition bewirkt, in der ein Arm des Betätigungselementes mittels umfangsseitig angreifender Federn gehalten ist.

Es ist Aufgabe der Erfindung, einen elektrischen Schalter - der eingangs genannten Art zu schaffen, der bei einem robusten und einfachen Aufbau eine hohe Lebensdauer aufweist.

Erfindungsgemäß wird die Aufgabe dadurch gelöst, dass dem Betätigungselement zur Erzeugung einer Schalt- und Rückstellkraft mindestens eine Drehfeder und zur Dämpfung der Rückstellbewegung mindestens ein Dämpfungselement zugeordnet ist.

Aufgrund der Zuordnung der Drehfeder zu dem Betätigungselement ist mit einfachen Mitteln eine Kompensation einer relativ hohen auf das Betätigungselement einwirkenden Schaltkraft, wie sie beispielsweise durch ein Angreifen mit einer Hand eines Nutzers beim Schalten eines Getriebes gegeben ist, durch entsprechende Auslegung der Drehfeder, also mit einfachen Mitteln, gewährleistet. Darüber hinaus wirken bei der Verwendung einer Drehfeder keine die Lebensdauer des Schalters reduzierenden Reibungskräfte und eine Rückstellung des Betätigungselementes aus einer beaufschlagten Schaltstellung in eine unbeaufschlagte Stellung ist auch bei einem verhältnismäßig schweren Betätigungselement bzw. schwergängigen Schaltelementen sichergestellt. Selbstverständlich kann die Drehfeder in Abhängigkeit von der Ausgestaltung des Schalters direkt mit dem Betätigungselement oder mit von dem Betätigungselement beaufschlagten Schaltgliedern der Schalteinrichtung verbunden sein. Darüber hinaus ist es möglich, jeder Beaufschlagungsrichtung des Betätigungselementes mindestens eine Drehfeder zuzuordnen. Um nach dem Loslassen des gegen die Wirkung der Drehfeder beaufschlagten Betätigungselementes ein unkontrolliertes Anschlagen bzw. eine unerwünschte Geräuschentwicklung beim Anschlagen an ein gehäuseseitiges Bauteil zu vermeiden, ist dem Betätigungselement mindestens ein Dämpfungselement zur Dämpfung der Rückstellbewegung zugeordnet. Aufgrund des Dämpfungselementes wird die Wirkung der Drehfeder bei der Rückstellbewegung des Betätigungselementes gedämpft und beispielsweise ein unerwünscht festes Anschlagen vermieden. Das Dämpfungselement kann in Abhängigkeit von der Ausgestaltung des Schalters direkt mit dem Betätigungselement oder mit von dem Betätigungselement beaufschlagten Schaltgliedern der Schalteinrichtung verbunden sein, wobei insbesondere für jede Schwenkrichtung des Betätigungselementes ein als Silikon-Rotations-Dämpfer ausgebildetes Dämpfungselement vorgesehen ist.

In Ausgestaltung steht das Betätigungselement mit mehreren nacheinander in mindestens einer der jeweiligen Beaufschlagungsrichtungen wirksamen Drehfedern zur Erhöhung der Schaltkraft in Verbindung. Die Drehfedern können auch so abgestuft sein, dass ein stufenweises Betätigen des Betätigungselementes haptisch wahrnehmbar ist. Beispielsweise wirkt beim Verschwenken des Betätigungselementes aus seiner Ausgangsstellung heraus zunächst nur eine Drehfeder und vor dem Endanschlag des Betätigungselementes setzt die zweite Drehfeder in ihrer Wirkung ein, so dass die erforderliche Schaltkraft zur weiteren Verschwenkung merklich erhöht ist.

Vorzugsweise ist das Betätigungselement getastet aus einer Neutralposition kreuzweise verschwenkbar gelagert. Demnach nimmt das Betätigungselement eine mittige Ausgangsstellung und vier getastete Schaltstellungen ein, wobei sowohl in X-und Y-Richtung der Verschwenkung Drehfedern und gegebenenfalls auch Dämpfungselemente vorgesehen sind.

Nach einer Weiterbildung ist das Betätigungselement in einem ersten Lagerrahmen gehalten, der über Achsstummel in einem zweiten Lagerrahmen schwenkbar aufgenommen ist, wobei der zweite Lagerrahmen in einer senkrecht zum ersten Lagerrahmen ausgerichteten Schwenkrichtung über Achsstummel in dem Gehäuse geführt ist. Die Lagerrahmen halten bei einer entsprechenden Dimensionierung und Materialwahl einer hohen Beanspruchung stand. Zweckmäßigerweise sind die Drehfedern und/oder Dämpfungselemente auf den Achsstummeln angeordnet. Sonach sind separate Halterungen und Lagerstellen nicht erforderlich.

Eine besondere Verwendung findet der zuvor erläuterte Schalter zum Ansteuern eines automatischen oder automatisierten Getriebes eines Kraftfahrzeuges.

Bei einem Kraftfahrzeug mit einem mit einem automatischen oder automatisierten Getriebe gekoppelten Schalter der vorstehenden Art ist dieser in einer Mittelkonsole derart ausgerichtet angeordnet, dass seine kreuzweise zueinander verlaufenden Beaufschlagungsrichtungen in Fahrzeuglängs- und Fahrzeugquerachse verlaufen, wobei eine Beaufschlagung des Betätigungselementes in Richtung der Fahrzeugfront ein

Schalten des Getriebes in einen nächst größeren Gang und eine Beaufschlagung des Betätigungselementes in Richtung des Fahrzeughecks ein Schalten des Getriebes in einen nächst niedrigeren Gang bewirkt.

Es versteht sich, dass die vorstehend genannten und nachstehend noch zu erläuternden Merkmale nicht nur in der jeweils angegebenen Kombination, sondern auch in anderen Kombinationen verwendbar sind. Der Rahmen der Erfindung ist nur durch die Ansprüche definiert.

Die Erfindung wird im Folgenden anhand eines Ausführungsbeispieles unter Bezugnahme auf die zugehörigen Zeichnungen näher erläutert. Es zeigt:

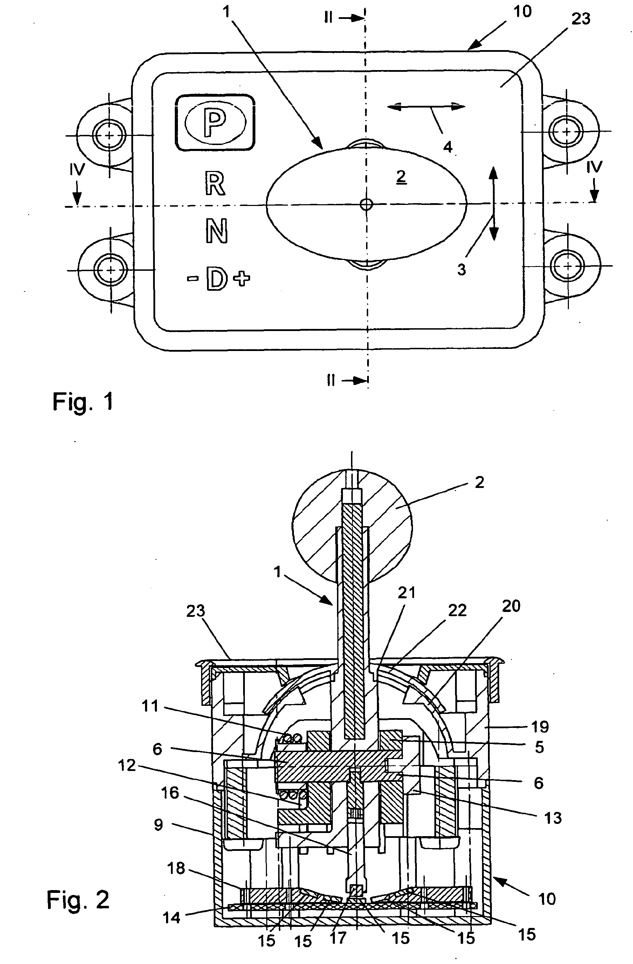

- Fig.1: eine Draufsicht auf einen erfindungsgemäßen Schal- ter,
- Fig.2: eine Darstellung eines Schnittes gemäß der Linie II-II nach Fig. 1,

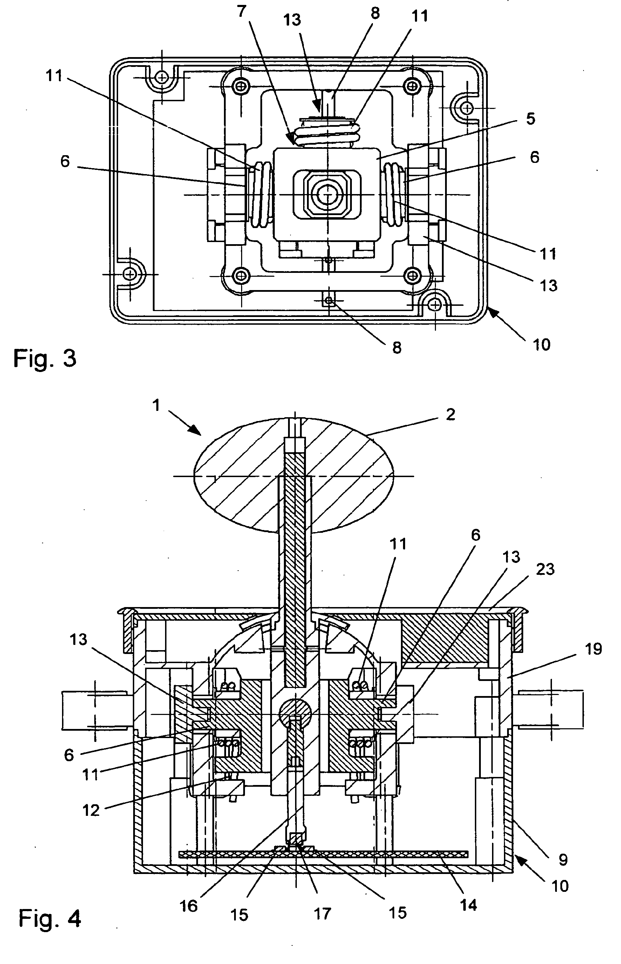

- Fig.3: eine Teildarstellung des Schalters nach Fig. 1 und
- Fig.4: eine Darstellung eines Schnittes gemäß der Linie IV-IV nach Fig. 1.

Der Schalter umfasst ein kreuzgelenkig gelagertes Betätigungselement 1 mit einem von einer Hand erfassbaren Knauf 2 und dient zum Ansteuern eines automatisierten Getriebes eines Kraftfahrzeuges. Bei einem getasteten Verschwenken des Betätigungselementes 1 in die eine oder andere Richtung des Doppelpfeils 3 erfolgt in Abhängigkeit von dem Schwenkwinkel die Auswahl der Schaltstellungen "Parken" P, "Rückwärts" R, "Neutral" N oder "Fahren" D. Durch das Verschwenken des Betätigungselementes 1 in die eine oder andere Richtung des Doppelpfeils 4 wird in die nächst höhere oder niedrigere Fahrstufe geschaltet. Hierzu ist das Betätigungselement 1 in einem ersten Lagerrahmen 5 gehalten, der über Achsstummel 6 in einem zweiter Lagerrahmen 7 schwenkbar aufgenommen ist, wobei der zweite Lagerrahmen 7 in einer senkrecht zum ersten Lagerrahmen 5 ausgerichteten Schwenkrichtung über Achsstummel 8 in einem Sockel 9 eines Gehäuses 10 geführt ist.

Zur Erzeugung einer Schalt- und Rückstellkraft sind den Achsstummeln 6 des ersten Lagerrahmens 5 zwei jeweils als Drehschenkelfeder ausgebildete Drehfedern 11 zugeordnet und ein Achsstummel 8 des zweiten Lagerrahmens 7 weist eine als Drehschenkelfeder ausgebildete Drehfeder 11 auf, wobei Schenkel 12 der Drehfedern 11 an dem Sockel 9 gehäuseseitig anliegen. Beim Verschwenken des Betätigungselementes 1 aus seiner Ausgangsstellung heraus in einer der Richtungen des Doppelfeils 3 wirkt zunächst die erste dem ersten Lagerrahmen 5 zugeordnete Drehfeder 11, bis die Schaltstellung "Rückwärts" R oder "Neutral" N erreicht ist. Beim weiteren Verschwenken setzt zusätzlich die Wirkung der zweiten dem ersten Lagerrahmen 5 zugeordneten Drehfeder 11 ein, so dass das Erreichen der jeweils folgenden Schaltstellungen, nämlich "Parken" P oder "Fahren" D, deutlich von einem Nutzer wahrgenommen wird.

Um nach dem Loslassen des gegen die Wirkung der Drehfeder 11 beaufschlagten Betätigungselementes 1 ein unkontrolliertes Anschlagen bzw. eine unerwünschte Geräuschentwicklung beim Anschlagen an ein gehäuseseitiges Bauteil zu vermeiden, ist jeweils einem Achsstummel 6, 8 ein als Silikon-Rotations-Dämpfer ausgebildetes Dämpfungselement 13 zur Dämpfung der Rückstellbewegung zugeordnet.

Darüber hinaus befindet sich in dem Sockel 9 des Gehäuses 10 eine mit einem Bordnetz des Kraftfahrzeuges gekoppelte Leiterplatte 14, die als Hall-Sensoren ausgebildeten Sensoren 15 aufweist, die zum Erfassen der Schaltstellungen des Betätigungselementes 1 mit einem an einem freien Ende eines Ansatzes 16 des Betätigungselementes 1 angeordneten Magneten 17 zusammenwirken. Die der Schwenkrichtung gemäß dem Doppelpfeil 3 zugeordneten Sensoren 15 befinden sich auf einem kreisbahnförmigen Teil 18, das mit der Leiterplatte 14 verbunden ist, um einen gleichmäßigen Abstand des Magneten 17 zu den Sensoren 15 einzuhalten.

Um zum einen eine Führung des Betätigungselementes 1 bereitzustellen und ein Eindringen von Schmutz in das Innere des Gehäuses 10 zu vermeiden, ist auf den Sockel 9 ein Gehäuseoberteil 19 mit einem Kugelabschnitt 20 befestigt, der eine kreuzförmige Führung 21 aufweist, wobei sich über den Kugelabschnitt 20 ein an dem Betätigungselement 1 befestigtes, die Führung 21 überragendes Schild 22 erstreckt. Auf dem Gehäuseoberteil 19 ist ein Deckel 23 befestigt. Dringt durch den Deckel 23 Schmutz oder Flüssigkeit ein, wird diese Verunreinigung über das Schild 22 abgewiesen, um sich auf dem Gehäuseoberteil 19 zu sammeln. Sonach gelangen Verunreinigungen erst nach dem Erreichen einer bestimmten Höhe in das Innere des Schalters bzw. Sockels 9 zu den Sensoren 15.

## Patentansprüche

1. Elektrischer Schalter mit einem getastet aus einer Neutralposition in mindestens zwei entgegengesetzte Richtungen verschwenkbaren Betätigungselement (1) mit einem in ein Gehäuse (10) ragenden Ansatz (16), dem eine Schalteinrichtung zugeordnet ist, dem Betätigungselement (1) ist zur Erzeugung einer Schalt- und Rückstellkraft mindestens eine Drehfeder (11) zugeordnet dem Betätigungselement (1) **dadurch gekennzeichnet, dass** zur Dämpfung der Rückstellbewegung mindestens ein Dämpfungselement (13) zugeordnet ist.

2. Schalter nach Anspruch 1, **dadurch gekennzeichnet, dass** das Betätigungselement (1) mit mehreren nacheinander in mindestens einer der jeweiligen Beaufschlagungsrichtungen (Doppelpfeil 3, 4) wirksamen Drehfedern (11) zur Erhöhung der Schaltkraft in Verbindung steht.

3. Schalter nach Anspruch 1 oder 2, **dadurch gekennzeichnet, dass** das Betätigungselement (1) getastet aus einer Neutralposition kreuzweise verschwenkbar gelagert ist.

4. Schalter nach Anspruch 3, **dadurch gekennzeichnet, dass** das Betätigungselement (1) in einem ersten Lagerrahmen (5) gehalten ist, der über Achsstummel (6) in einem zweiter Lagerrahmen (7) schwenkbar aufgenommen ist, wobei der zweite Lagerrahmen (7) in einer senkrecht zum ersten Lagerrahmen (5) ausgerichteten Schwenkrichtung über Achsstummel (8) in dem Gehäuse (10) geführt ist.

5. Schalter nach Anspruch 4, **dadurch gekennzeichnet, dass** die Drehfedern (11) und/oder Dämpfungselemente (13) auf den Achsstummeln (6, 8) angeordnet sind.

6. Verwendung eines Schalters nach einem der Ansprüche 1 bis 5 zum Ansteuern eines automatischen oder automatisierten Getriebes eines Kraftfahrzeuges.

7. Kraftfahrzeug mit einem mit einem automatischen oder automatisierten Getriebe gekoppelten Schalter nach einem der Ansprüche 1 bis 5, der in einer Mittelkonsole derart ausgerichtet angeordnet ist, dass seine kreuzweise zueinander verlaufenden Beaufschlagungsrichtungen in Fahrzeuglängs- und Fahrzeugquerachse verlaufen, wobei eine Beaufschlagung des Betätigungselementes in Richtung der Fahrzeugfront ein Schalten des Getriebes in einen nächst größeren Gang und eine Beaufschlagung des Betätigungselementes in Richtung des Fahrzeughecks ein Schalten des Getriebes in einen nächst niedrigeren Gang bewirkt.

## Claims

1. Electrical switch having an actuator element (1) pivotable from a neutral position to at least two opposite directions when actuated with a lug (16) projecting into a housing (10), having assigned a switching device, wherein at least a torsion spring (11) is assigned to the actuator element (1) for producing a switching and resetting force, **characterized in that** at least a damping element (13) is assigned to the actuator element (1) for damping the resetting movement.

2. Switch according to claim 1, **characterized in that** the actuator element (1) is connected with a plurality of torsion springs (11), effective sequentially in at least one of the respective actuating directions (double arrow 3, 4), to increase the switching power.

3. Switch according to claim 1 or 2, **characterized in that** the actuator element (1) is supported to be actuated crosswise pivotable from a neutral position.

4. Switch according to claim 3, **characterized in that** the actuator element (1) is held in a first supporting frame (5), pivotably received via a stub axle (6) in a second supporting frame (7), wherein the second supporting frame (7) is guided in a pivot direction, aligned perpendicular to the first supporting frame (5), via a stub axle (8) in the housing (10).

5. Switch according to claim 4, **characterized in that** the torsion springs (11) and/or damping elements (13) are arranged on the stub axles (6, 8).

6. Usage of a switch according to one of the claims 1 to 5 for driving an automatic or automated transmission of a motor vehicle.

7. Motor vehicle having a switch according to one of the claims 1 to 5 coupled to an automatic or automated transmission, which is arranged in a center console such that its crosswise actuating directions are in vehicle longitudinal axis and vehicle transverse axis, wherein urging the actuator element in the direction of the vehicle front effects shifting of the transmission in a next higher gear and urging the actuator element in the direction of the vehicle rear effects shifting of the transmission in a next lower gear.

## Revendications

1. Commutateur électrique comprenant un élément d'actionnement (1) capable de basculer, quand on le touche, à partir d'une position neutre vers au moins deux directions opposées, comprenant un talon (16) pénétrant dans un boîtier (10) et auquel est associé un système de commutation, dans lequel au moins un ressort rotatif (11) est associé à l'élément d'actionnement (1) pour engendrer une force de commutation et de rappel, **caractérisé en ce qu'**au moins un élément amortisseur (13) est associé à l'élément d'actionnement (1) pour amortir le mouvement de rappel.

2. Commutateur selon la revendication 1, **caractérisé en ce que** l'élément d'actionnement (1) est en relation avec plusieurs ressorts rotatifs (11) agissant les uns après les autres dans l'une au moins des directions de sollicitation respective (flèche double 3, 4) pour augmenter la force de commutation.

3. Commutateur selon la revendication 1 ou 2, **caractérisé en ce que** l'élément d'actionnement (1) est monté de manière à pouvoir basculer, quand on le touche, de manière croisée à partir d'une position neutre.

4. Commutateur selon la revendication 3, **caractérisé en ce que** l'élément d'actionnement (1) est retenu dans un premier cadre de montage (5), lequel est reçu de manière à pouvoir pivoter dans un second cadre de montage (7) via des moignons d'axe (6), et le second cadre de montage (7) est guidé dans le boîtier (10) via des moignons d'axe (8), dans une direction de pivotement orientée perpendiculairement au premier cadre de montage (5).

5. Commutateur selon la revendication 4, **caractérisé en ce que** les ressorts rotatifs (11) et/ou les éléments d'amortissement (13) sont agencés sur les moignons d'axe (6, 8).

6. Utilisation d'un commutateur selon l'une des revendications 1 à 5 pour piloter une boîte de vitesses automatique ou automatisée d'un véhicule automobile.

7. Véhicule automobile comprenant un commutateur, accouplé à une boîte de vitesses automatique ou automatisée, selon l'une des revendications 1 à 5, qui est agencé dans une console centrale dans une orientation telle que ses directions de sollicitation, s'étendant de façon croisée l'une par rapport à l'autre, s'étendent suivant l'axe longitudinal et suivant l'axe transversal du véhicule, de sorte qu'une sollicitation de l'élément d'actionnement en direction de l'avant du véhicule entraîne une commutation de la boîte de vitesses dans une vitesse immédiatement supérieure et qu'une sollicitation de l'élément d'actionnement en direction de l'arrière du véhicule entraîne une commutation de la boîte de vitesses dans une vitesse immédiatement inférieure.
